# EUROPÄISCHE PATENTSCHRIFT

(11) **EP 0 943 079 B1**
(45) Veröffentlichungstag und Bekanntmachung des Hinweises auf die Patenterteilung: **25.10.2000**
(21) Anmeldenummer: 96946038.5
(22) Anmeldetag: 04.12.1996
(51) Int. Cl.: G01L 5/00, G01M 5/00

(54) **VERFAHREN UND VORRICHTUNG ZUR PRÜFUNG DER STANDFESTIGKEIT VON STEHEND VERANKERTEN MASTEN**
METHOD AND DEVICE FOR CHECKING THE SOLIDITY OF ANCHORED STANDING MASTS
PROCEDE ET DISPOSITIF DE CONTROLE DE LA SOLIDITE DE MATS ANCRES DEBOUT

(43) Veröffentlichungstag der Anmeldung: 22.09.1999
(73) Patentinhaber: Roch, Mathias, 23923 Herrnburg (DE); Roch, Oliver, 23623 Ahrensbök (DE)
(72) Erfinder: Roch, Mathias, 23923 Herrnburg (DE); Roch, Oliver, 23623 Ahrensbök (DE)
(74) Vertreter: Wilcken, Thomas, Dipl.-Ing.
(86) Internationale Anmeldenummer: DE9602319
(87) Internationale Veröffentlichungsnummer: WO9825117

(56) Entgegenhaltungen:
- DE-U- 29 607 045
- US-A- 5 212 654

## Beschreibung

Die Erfindung betrifft ein Verfahren zur Prüfung der Standfestigkeit von stehend verankerten Masten, gemäß dem Oberbegriff des Anspruches 1. Weiterhin betrifft die Erfindung eine entsprechende Vorrichtung gemäß dem Oberbegriff nach Anspruch 11.

Im Patent US 5 212 654 sind Verfahren für eine zerstörungsfreie Prüfung von Masten auf deren Restfestigkeit beschrieben, um die noch mögliche Belastung eines Mastes zu ermitteln, bevor dieser brechen könnte. Wenn festgestellt wird, daß die Restfestigkeit und die somit noch zu erwartende Lebensdauer zu gering sind, muß der betreffende Mast ausgetauscht werden.

Bei diesen bekannten Verfahren wird beispielsweise so vorgegangen, daß der Mast oberhalb seiner Verankerung mit einer fest vorgegebenen Kraft belastet wird, die seiner vorab berechneten zulässigen Restfestigkeit entspricht. Wenn die seitliche Auslenkung des Mastes, nachdem die Kraft den vorgegebenen Wert erreicht hat, als übermäßig groß festgestellt wird, ist dies ein Kriterium für eine Schädigung und notwendige Auswechslung des Mastes.

Zu einem entsprechenden Ergebnis kommt man auch, wenn eine vorab berechnete und der theoretischen Restfestigkeit entsprechende Auslenkung vorgegeben wird und dann der Mast von der Seite her mit einer ansteigenden Kraft so lange belastet wird, bis die Auslenkung erreicht ist. Falls die am Ende des Prüfvorganges gemessene Kraft als übermäßig gering festgestellt wird, ist ein Austausch des Mastes vorzunehmen, da bei einem schadenfreien und weniger elastischen Mast die Kraft zum Erreichen der festgelegten Auslenkung vergleichsweise größer wäre.

Schließlich wird im vorerwähnten Patent noch ein Prüfverfahren vorgeschlagen, bei dem der Mast mit einer laufend gemessenen Kraft belastet und gleichzeitig die seitliche Mastauslenkung gemessen wird, um aus diesen Werten am Ende des Prüfvorganges die Restfestigkeit des Mastes zu berechnen.

Bei diesen Verfahren werden keine Vorkehrungen für den Fall getroffen, daß ein geschädigter Mast bei ansteigenden Belastungskräften und Biegemomenten aus dem Bereich einer elastischen Verformung in eine plastische Verformung übergeht, also sogar knicken oder durchbrechen könnte, ohne daß dies vorher erkannt und die Prüfung durch Aufhebung der Masthelastung abgebrochen werden könnte. Insofern wird für diesen Fall nur vorgesehen, den Mast vor dem Prüfvorgang mit einem Gestell oder mit Seilen, Ketten oder dergleichen zu stützen oder den Mast lose an einem Kran zu sichern, damit beim Knicken oder Brechen des Mastes kein Schaden entstehen kann.

Außerdem wird der Mast noch unten oberhalb seiner Verankerung mit einer Konterung gesichert, so daß er oder seine Verankerung gegen Versatz im Boden fixiert sind. Dies hat allerdings zur Folge, daß in die Prüfung des Mastes nur der frei oberhalb der Verankerung bzw. des Bodens befindliche Mastteil einbezogen werden kann und keine Aussage zu der Frage möglich ist, ob evtl, nur oder auch der andere Teil des Mastes geschädigt sein könnte oder ob der Mast überhaupt ausreichend standfest ist.

In der EP 0 638 794 A1 ist ein Verfahren zum Prüfen der Stand- und Biegefestigkeit eines stehend verankerten Mastes beschrieben, bei dem der Mast ebenfalls einem variablen Biegemoment ausgesetzt wird, indem er mit einer oberhalb seiner Verankerung eingeleiteten und im Verlauf des Prüfvorganges ansteigenden Kraft belastet wird, deren gemessener Wert und Verlauf zur Bestimmung der Festigkeit des Mastes herangezogen werden. Sowohl die erwähnte Kraft als auch die Strecke, um die der Mast an einer ausgewählten Stelle aufgrund des Biegemomentes seitlich ausgelenkt wird, werden zeitgleich mit Sensoren gemessen.

Eine lineare Abhängigkeit der erwähnten Strecke von der eingeleiteten Kraft wird als Aussage für eine im Bereich der elastischen Verformung liegende Mastauslenkung verwertet, während die Feststellung einer nicht linearen Abhängigkeit der von den Sensoren gemessenen Werte als Aussage für eine plastische Verformung und/oder für eine nicht stabile Verankerung des dann als nicht biegefest bzw. nicht standfest erkannten Mastes verwertet und der Prüfvorgang durch Entlasten des Mastes abgebrochen wird. Deshalb sind bei diesem Verfahren keine Sicherheitsvorkehrungen für den auch nicht zu erwartenden Fall zu treffen, nämlich daß der Mast bei diesem Prüfschritt umknicken oder brechen könnte. Im übrigen wird der Prüfvorgang durch Entlasten des Mastes erst dann abgebrochen, wenn ein vorgegebener Sollwert des Biegemomentes im elastischen Bereich der Verformung erreicht wird, was bedeutet, daß der Mast ausreichend stand- und biegefest ist und nicht gegen einen anderen ausgewechselt werden muß.

Mit allen vorerwähnten Verfahren ist es nicht möglich festzustellen, ob der jeweils geprüfte Mast trotz einer im elastischen Bereich liegenden Verformung bis zum Erreichen der Prüflast z. B. durch einen Riß oder durch einen den Mast ggf. durchsetzenden Korrosionsbereich geschädigt ist, so daß es für den Fall eines solchen Schadens möglicherweise zu einer falschen Beurteilung der verbleibenden Festigkeit des Mastes kommen kann, weil beispielsweise bei Anwendung des Verfahrens nach der EP 0 638 794 A1 ein linearer Verlauf der Funktion f = F(S), wobei F die eingeleitete Kraft und S die seitliche Mastauslenkung oder der sich im Belastungsfall ändernde Biegewinkel des Mastes bedeuten, vortäuschen könnte, daß der Mast nicht geschädigt ist.

Dieses Problem wird mit dem im Gebrauchsmuster DE 296 07 045 U beschriebenen Verfahren gelöst, bei dem mittels einer Krafteinheit der Mast oberhalb seiner Verankerung in gleicher Prüfebene von der Seite her nacheinander mit einer Druckkraft und einer Zugkraft, also mit entgegengesetzt gerichteten Biegemomenten belastet wird, so daß sich für beide Belastungsfälle zwei Funktionen fₓ und f_{y} ergeben werden und in einer Auswerteeinheit verarbeitet und verglichen werden können. Außerdem werden diese Funktionen zweckmäßigerweise auf einem Monitor und/oder mit einem Drucker graphisch zur gleichzeitigen Begutachtung bzw. nachträglichen Auswertung dargestellt.

Diese Funktionen sind bei angenommenem geraden Verlauf insbesondere insofern aussagekräftig, als sie Auskunft darüber geben, ob ein beispielsweise durch einen Riß im Mast gegebener Schaden vorliegt und wo sich dieser Schaden befindet.

Wenn beide Funktionen fₓ, f_{y} den gleichen Verlauf und somit die gleiche Steigung haben, läßt dies darauf schließen, daß jedenfalls kein Schaden des Mastes in der vertikalen Prüfebene und im unmittelbar neben dieser Ebene befindlichen Mastbereich vorliegen wird. Falls dagegen die Verläufe der beiden auf den gleichen Nullpunkt bezogenen Funktionen fₓ, f_{y} divergieren und somit unterschiedliche Steigungen haben, läßt dies auf einen Mastschaden schließen, selbst wenn die aus den beiden Funktionen gewonnenen Kennlinien linear bzw. gerade verlaufen, weil sich ein z. B. mit einem Riß behafteter Mast sogar nach einer begrenzten Weiterbildung des Risses bei zunehmender Belastung des Mastes weiter elastisch verhalten wird und sich eine Rißbildung höchstens in einem kleinen Knick in der im übrigen weiter linear verlaufenden Kennlinie auswirken wird.

Wie bereits erwähnt wurde, kann aus den beiden in gleicher Prüfebene gewonnenen Funktionen und deren Verläufen auch auf den Ort des Schadens geschlossen werden. Wenn nämlich z. B. die beim Druckvorgang ermittelte Funktion fₓ eine größere Steigung als die beim Zugvorgang festgestellte Funktion f_{y} haben sollte, wird dies bedeuten, daß sich der Riß auf der Seite des Mastes befinden wird, an welcher die Zugkraft eingeleitet wurde, da zu erwarten ist, daß sich der Mast aufgrund einer geringen Aufweitung eines quer verlaufenden Risses, ohne daß dieser dabei größer werden müßte, elastischer verhalten wird als bei entgegengesetzt gerichtet eingeleiteter Druckkraft, bei der sich gegenüberliegende Rißflächen zusammengepreßt werden und sich der Mast bei dieser Belastungsrichtung wie einer ohne Rißbildung weniger elastisch verhalten wird. Sinngemäß gilt gleiches, wenn der Riß vertikal oder mit einer vertikalen Komponente im Mast verlaufen würde. Wegen weiterer Kriterien zur Begutachtung eines zu prüfenden Mastes wird auf die im Gebrauchsmuster DE 296 07 045.9 U angegebenen Lösungen verwiesen, von denen auch die Erfindung wenigstens teilweise ausgeht und Gebrauch macht.

Allen vorher abgehandelten Verfahren ist der Nachteil gemeinsam, daß bei ihnen nicht der Umstand exakt berücksichtigt werden kann, daß der Mast bzw. seine Verankerung bei den jeweiligen Belastungsfällen seine bzw. ihre Position im oder am Boden verändern kann. Jedenfalls kann es passieren, daß es bei den Prüfvorgängen beispielsweise dazu kommen kann, daß Bewegungen und ein Kippversatz des Mastes oder seiner Verankerung auf oder im Boden auftreten und dabei Bodenmaterial durch Kippen des Mastes bzw. seiner Verankerung bleibend verschoben wird, was sich natürlich auf den Verlauf der Funktionen f so auswirken würde, daß diese nicht mehr eine eindeutige Aussage über die Festigkeit des Mastes als solchen geben werden.

Insbesondere dieser Nachteil soll durch die Erfindung beseitigt werden, indem ein Verfahren und eine Prüfvoreinrichtung vorgeschlagen werden, mit denen auf relativ einfache und vor allem sichere Weise eine aussagekräftige Entscheidung und Beantwortung der Frage erreicht werden kann, ob einerseits ein geprüfter Mast ausreichend standfest ist und ob andererseits die gewonnenen Meßergebnisse darauf schließen lassen, ob ein Versatz des Mastes bzw. seiner Verankerung im Boden vorliegt, wobei selbst bei Feststellung eines solchen Versatzes dennoch eine Aussage möglich sein soll, ob der Mast geschädigt ist oder nicht.

Die Lösung der Aufgabe ist im Patentanspruch 1 angegeben. Eine entsprechende Vorrichtung ist in dem Patentanspruch 11 angegeben.

Mit der Lösung nach dem crfindungsgemäßen Verfahren ist es möglich, den Zustand der Verankerung des Mastes im Erdboden bei der Prüfung des Systemes Mast/Verankerung auch dann mit zu erfassen, wenn das System der maximalen Prüfkraft unterworfen worden ist. Es wird klar erkennbar, ob sich die Verankerung stabil bzw. standfest verhalten hat, d. h., ob sie allen auf sie einwirkenden Kräften widerstanden und sich demgemäß nicht bewegt hat oder ob sie auch bei Erreichen der maximalen Prüfkraft nachgegeben hat, sich also bewegt und in der Regel eine Kippbewegung durchgeführt hat. Es gibt nämlich in der Praxis Situationen, wo nicht unbedingt an der Verankerung selbst und/oder an der Boden umgebung der Verankerung erkennbar ist, ob eine Kippbewegung und damit ein Kippversatz der Verankerung beim Prüfvorgang stattgefunden hat. Weiter ist erkennbar, ob bei Kippversatz des Mastes und seiner Verankerung eine Schädigung des Mastes vorliegt oder nicht. Ferner ist auch erkennbar, ob bei stabil gebliebener Verankerung eine Mastschädigung vorliegt oder nicht.

Ein wesentlicher Grund für die Gewinnung aussagefähiger Beurteilungskennlinien bei der Prüfung des Systemes Mast/Verankerung besteht neben der Aufzeichnung der jeweiligen Belastungskennlinie erfindungsgemäß auch in der Aufzeichnung der jeweiligen zugehörigen Entlastungskennlinie. Stellt sich bei der Prüfung heraus, daß die betreffende ermittelte Entlastungskennlinic einen von ihrer zugehörigen Belastungskennlinie abweichenden Verlauf hat, also beispielsweise nicht in den Nullpunkt der Belastungskennlinie zurückkehrt, dann liegt mindestens ein Kippversatz der Mastverankerung vor. Stellt sich heraus, daß das Linienpaar aus Belastungskennlinie und Entlastungskennlinie bis zur maximalen Prüflast identisch ist, daß also die Entlastungskennlinie den gleichen steilen Verlauf hat wie die Belastungskennlinie und in den Nullpunkt der Belastungskennlinie zurückkehrt, dann steht fest, daß sowohl der Mast als auch seine Verankerung in Ordnung sind. Ferner kann auch festgestellt werden, daß der Mast trotz eines festgestellten Kippversatzes seiner Verankerung in Ordnung ist.

Weil überraschenderweise festgestellt wurde, daß die Entlastungskennlinie, die im aufgezeichneten Kraft-Auslenkung-Diagramm von ihrer maximalen, im elastischen Verformungsbereich des Mastes angewendeten Prüfkraft zurückverläuft, bis die Prüfkraft aufgehoben ist, eine Gerade darstellt, ist bei einem Vergleich der jeweiligen Entlastungskennlinie mit ihrer zugehörigen Belastungskennlinie oder der Entlastungskennlinien untereinander erkennbar, ob der Mast allein und/oder seine Verankerung einen Schaden aufweist oder nicht, und zwar unter Einbeziehung der Mastverankerung bis zum Erreichen der maximalen Prüflast. Die Mastverankerung wird also normalerweise bei dem erfindungsgemäßen Prüfverfahren mit einbezogen und nicht vom Mast isoliert. Das erfindungsgemäße Verfahren erlaubt also gegenüber den bisher bekannten Verfahren auf einfache Weise eine gesteigerte Aussagefähigkeit über das geprüfte System Mast und seine Verankerung.

Zur weiteren Verbesserung der Aussagefähigkeit über die Schädigung des Mastes und seiner Verankerung werden die unmittelbar auf den Mast aufgebrachten Prüfbelastungen zur Ermittlung der Belastungskennlinien und der Entlastungskennlinien je Prüfebene in zwei entgegengesetzten Richtungen angewendet. Das heißt, je Prüfebene eine Druckbelastung in der einen Richtung und eine Zugbelastung in der entgegengesetzten Richtung. Man erhält so vier Kennlinien, und aus einem Vergleich dieser Belastungskennlinien und Entlastungskennlinien miteinander ergibt sich eine noch genauere Aussage über eine Schädigung oder Nichtschädigung von Mast und/oder seiner Verankerung. Die Aussagefähigkeit kann noch weiter gesteigert werden, wenn eine Mehrzahl von Prüfchenen angewendet wird, insbesondere wenn dabei je Ebene in zwei entgegengesetzten Richtungen geprüft wird.

Eine Vorrichtung zur Durchführung des erfindungsgemäßen Verfahrens weist eine Auswerteeinheit auf, die mit Mitteln zum Feststellen einer zu der ermittelten Belastungskurve entsprechend der Funktion f1 gehörenden Entlastungskurve ausgerüstet ist, die eine Funktion f2 aus den von dem Kraft- und dem Wegsensor gemessenen Rückstellwerten darstellt. Diese Mittel können aus einem Rechner bestehen, der nach einem entsprechenden Programm arbeitet.

In einer bevorzugten Ausgestaltung kann die Auswerteeinheit mit Mitteln zum Vergleichen der Verläufe der Funktionen f1 und f2 zwecks Feststellung einer Abweichung der beiden Kurven voneinander als Kriterium für eine Schädigung des Mastes und/oder seiner Verankerung versehen sein. Diese Mittel können aus elektrischen Vergleichsschaltkreisen bestehen.

Die Meßergebnisse der Prüfvorgänge, d. h. die Verläufe der Belastungskennlinien und der Entlastungskennlinien entsprechend den Funktionen f1 bzw. f2 können optisch auf einem Monitor angezeigt und/oder mit einem Drucker dokumentiert werden. Eine solche Vorrichtung ist einfach im Aufhau und somit kostengünstig herzustellen sowie einfach zu handhaben.

Bevorzugte Ausgestaltungen der Erfindung sind in den Unteransprüchen angegeben.

Die Erfindung ist nachstehend an einem in den anliegenden Zeichnungen dargestellten Ausführungsbeispiel näher erläutert. Es zeigen:
- Fig. 1: einen schematischen und stark vereinfachten Aufbau einer Vorrichtung in Verbindung mit einem damit zu prüfenden Mast und seiner Verankerung,
- Fig. 2: Prüfungsvorgänge an einem Mast und seiner Verankerung mit der Vorrichtung nach Fig. 1,
- Fig. 3: das System Mast und seine Verankerung in einwandfreiem und in versetztem Zustand,
- Fig. 4 bis 13: Diagramme, die Belastungs- und Entlastungskennlinien bei einem innerhalb einer Ebene in zwei einander entgegengesetzten Richtungen geprüften Mast einschließlich seiner Verankerung zeigen.

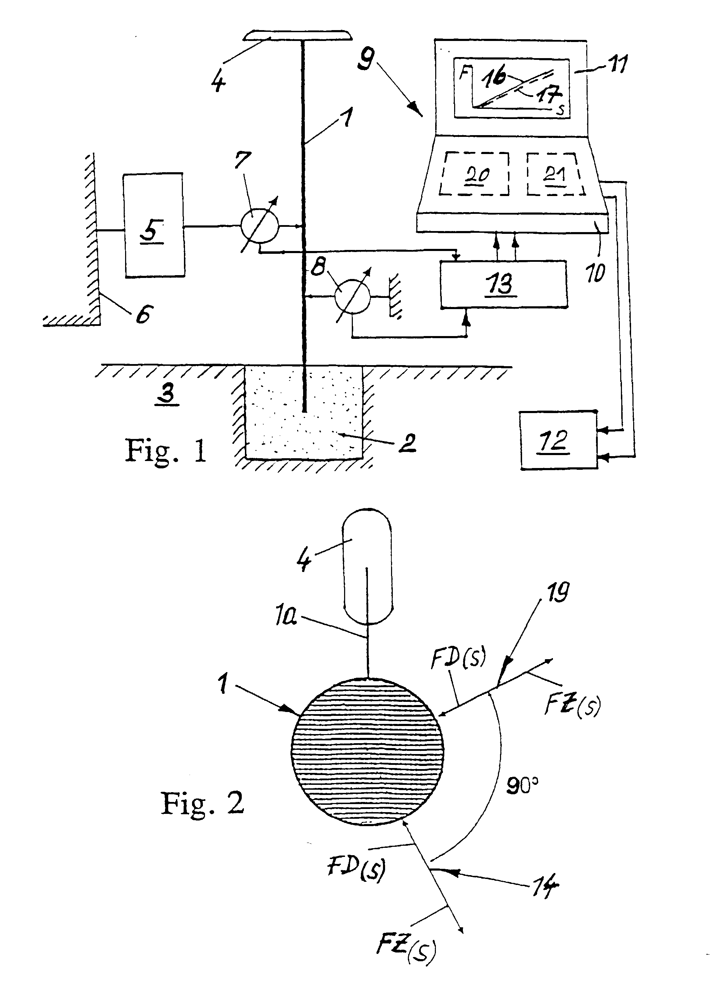

Gemäß den Figuren 1 und 2 ist ein Mast 1 mittels einer Verankerung 2 stehend im Erdboden 3 befestigt. Der Mast 1 sei beispielsweise ein Lichtmast, der gegebenenfalls an seinem Oberende einen Ausleger 1a aufweist, an dessen Ende eine Straßenbeleuchtung 4 angebracht ist.

Eine Vorrichtung zur Prüfung der Standfestigkeit des Mastes 1 einschließlich seiner Verankerung 2 umfaßt eine Krafteinheit 5, die beispielsweise an einem mobilen, schematisch angedeuteten Fahrzeug 6 anbringbar ist, einen Kraftsensor 7, der sich zwischen der Krafteinheit 5 und dem Mast 1 befindet, einen vorzugsweise als Wegstreckensensor ausgebildeten Wegsensor 8, der in derselben vertikal Kraftsensors 7, beispielsweise auf der anderen Seite des Mastes angeordnet ist, sowie eine mit dem Kraftsensor und dem Wegsensor verschaltete Auswerteeinheit 9. Diese Auswerteeinheit umfaßt einen Rechner 10, z. B. einen Personalcomputer, der mit einem Monitor 11 und/oder einem Drukker 12 verbunden ist. Ferner ist ein Transmitter 13 vorgesehen, der die Signale des Kraftsensors und des Wegsensors 8 in aufbereiteter Form dem Rechner 10 zuleitet. Der genauere, hier nicht weiter entscheidende Aufbau der vorstehend beschriebenen Vorrichtung kann so ausgeführt sein, wie es in der DE-U-94 04 664 beschrieben ist.

Die Auswerteeinheit 9 ist derart ausgestaltet, daß sowohl Druckkraftmeßergebnisse als auch Zugkraftmeßergebnisse in der jeweiligen Prüfungsebene und jeweils bezogen auf die zugehörige Mastauslenkung gemeinsam angezeigt werden. Die Ausgestaltung der Einheit 9 umfaßt somit Mittel 20 zum Feststellen von Belastungs- und Entlastungskennlinien. Hierzu können entsprechend programmierbare Rechnerbausteine verwendet werden. In einer Weiterbildung der Einheit 9 kann diese auch elektrische Vergleichsschaltkreise 21 enthalten, so daß die erhaltenen momentanen Kurven bzw. Kennlinien in der Auswerteeinheit automatisch miteinander verglichen werden können. Wird bei einem Vergleich der Kennlinien eine Abweichung voneinander festgestellt, folgt daraus, daß eine Schädigung des Mastes und/oder seiner Verankerung vorliegt. Die ermittelten Kennlinien können optisch (symbolisch oder alphabetisch) vorzugsweise auf dem Monitor angezeigt und/oder mit dem Drucker dargestellt werden. Zusätzlich kann zu den ermittelten Kennlinien auch ein akustisches Signal gegeben werden.

Die Prüfung des Mastes und seiner Verankerung auf Standfestigkeit wird wie folgt durchgeführt.

Es wird zunächst eine erste vertikale Prüfungsebene ausgewählt, in welcher der Mast 1 mittels einer Kraft, die oberhalb der Mastverankerung 2 an vorbestimmter Stelle am Mast angreift, belastet wird, d. h. auf Biegung beansprucht wird. Vorzugsweise wird eine solche Ebene ausgewählt werden, in welcher die Hauptbelastung des Mastes liegt. Hierbei wird vorzugsweise die Belastung des Mastes durch Windkräfte berücksichtigt.

In Fig. 2 ist mit dem Bezugszeichen 14 eine erste vertikale Prüfungsebene angedeutet, in welcher auch die Hauptbelastungskräfte im Betrieb des Mastes wirken. Es sei angenommen, daß zunächst eine bis zum einem vorbestimmten, maximalen Prüfwert reichende Druckkraft kontinuierlich ansteigend auf den Mast ausgeübt wird. Der an vorbestimmter Stelle oberhalb der Verankerung 2 an den Mast 1 angeschlossene Wegsensor 8 umfaßt bei diesem Beispiel die zur entsprechenden Druckkraft FD gehörenden, seitlichen Wegstrecken-Auslenkungen S. Beide Werte werden dabei zeitgleich und fortlaufend in den Transmitter 13 eingegeben, der sie wiederum entsprechend vorbereitet in den Rechner 10 eingibt. Dieser verarbeitet entsprechend einem Programm die eintreffenden Meßwerte, d. h. er setzt sie in ein Verhältnis, und zwar als Funktion f von der Kraft FD in Abhängigkeit von der zugehörigen Mastauslenkung S. Es entsteht so eine momentane Belastungskennlinie 16, wie es auf dem Monitor 11 zu sehen ist. Alternativ oder zusätzlich kann diese Kennlinie 16 auch auf dem mit dem Rechner 10 verbundenen Drucker 12 ausgedruckt und somit dokumentiert werden.

Nach Erreichen der maximalen Prüfkraft im elastischen Verformungsbereich des Mastes wird die weiter als Druckkraft wirkende Prüfkraft kontinuierlich fallend verringert. Hierbei wird wiederum eine Kennlinie, in diesem Fall jedoch in form einer Entlastungskennlinie 17, in der vorstehend beschriebenen Weise aufgenommen und auf dem Monitor 11 (gestrichelt angedeutet) angezeigt und/oder mit dem Drucker 12 aufgezeichnet. Im Unterschied zur Ermittlung der Belastungskennlinie 16 erfolgt die Ermittlung der Entlastungskennlinie 17 mit Hilfe eines entsprechend programmierten Rechnerprogrammes in umgekehrter Richtung, d. h. ausgehend von der maximalen Prüfkraft bis zur Prüfkraft mit dem Wert 0, wobei die sich jeweils reduzierende Mastauslenkung S zu der sich verringernden Prüfkraft FD in das Verhältnis gesetzt wird. Je nach dem Zustand des geprüften Systemes Mast und seiner Verankerung wird die Entlastungskennlinie den gleichen Verlauf haben wie die Belastungskennlinie oder beide Kennlinien werden voneinander abweichen. Aufgrund des Verlaufes der beiden ermittelten Kennlinien kann die prüfende Person schon eine Beurteilung des geprüften Systemes vornehmen.

Die Werte beider Kennlinien 16 und 17 können aber auch mittels Vergleichsschaltkreisen automatisch verglichen werden, und das jeweilige Ergebnis kann auf dem Monitor 11 angezeigt und/oder mit dem Drucker 12 dokumentiert werden.

Zur gesteigerten Aussagefähigkeit der Standfestigkeit oder Standsicherheit des Mastes 1 und/oder seiner Verankerung ist es vorteilhaft, in derselben vertikalen Prüfungsebene 14 in entgegengesetzter Richtung zur ersten Prüfkraft eine zweite Prüfkraft F anzuwenden. Wenn die erste Prüfkraft eine Druckkraft FD ist, ist die zweite Prüfkraft eine Zugkraft FZ, die kontinuierlich ansteigend und anschließend wieder abfallend mit gleichzeitiger Messung der jeweiligen Mastauslenkung ausgeübt wird. Entsprechend der vorstehenden Erläuterung wird wiederum eine momentane Belastungskennlinie 16 und eine momentane Entlastungskennlinie 17 erhalten, wie die Graphik auf dem Monitor 11 anzeigt. Diese Kennlinien können ebenfalls die gleiche Steigung aufweisen wie die zuvor erhaltenen Kennlinien heim ersten Prüfvorgang, sie können aber auch voneinander abweichen. Auch diese Kennlinien können auf dem Drucker 12 ausgedruckt werden.

Zur noch weiteren Steigerung der Aussagefähigkeit der Standfähigkeit des Mastes 1 und seiner Verankerung 2 kann der Mast in wenigstens einer weiteren vertikalen Prüfungsebene 19 wie vorstehend erläutert geprüft werden.

Diese weitere Prüfungsebene verläuft vorzugsweise im rechten Winkel zur ersten vertikalen Prüfungsebene 14. Es werden wiederum zwei momentane Kennlinien für Druckkraft- und Zugkraftanwendung erhalten, die auf dem Monitor 11 angezeigt werden und/oder mit dem Drucker 12 dauerhaft dokumentierbar sind. Wenn der Mast in beiden Prüfungsebenen 14 und 19 untersucht worden ist, ist damit seine sehr gute Aussage bezüglich der Standfestigkeit des Mastes und seiner Verankerung gegeben.

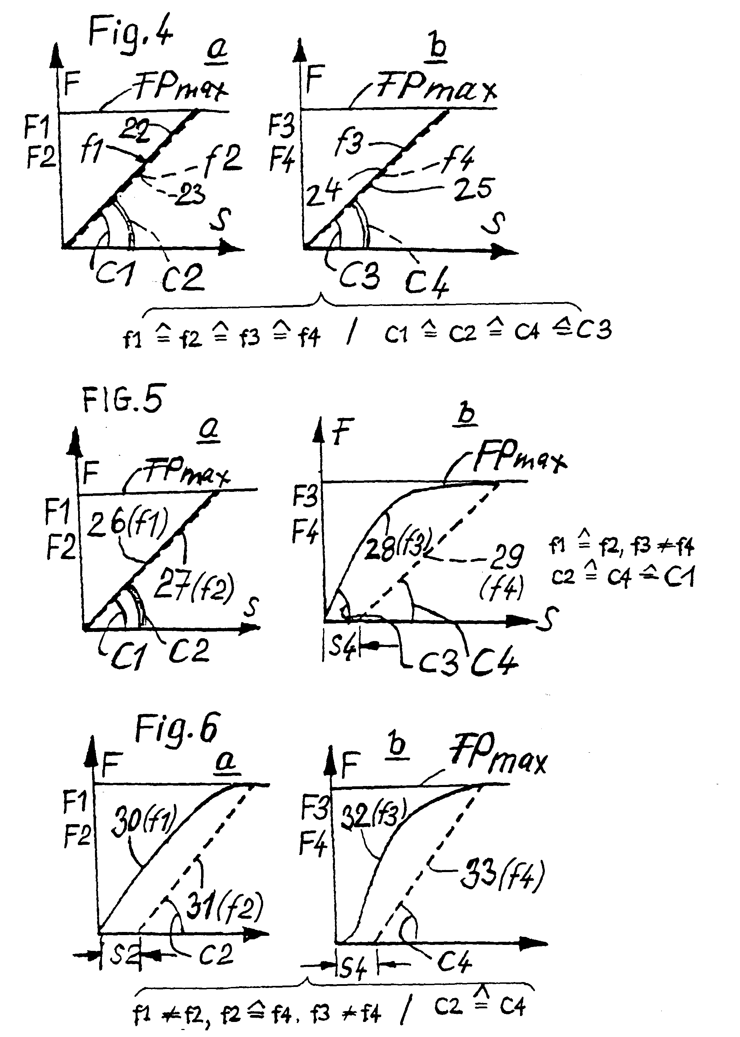

Die Kennlinien der Diagramme in den nachstehend beschriebenen Figuren 4a bis 9b geben die von der Auswerteeinheit 10 ausgewerteten Meßergebnisse wieder. Der Einfachheit halber sollen die Kennlinien dieser Figuren die in nur einer vertikalen Prüfungsebene gewonnenen Resultate darstellen. Sie gelten sinngemäß natürlich auch für gegebenenfalls mehrere ausgewählte vertikale Prüfungsebenen.

Es sei angenommen, daß der Mast 1 und seine Verankerung 2 zunächst mit einer Druckkraft biegebelastet werden. Man erhält gemäß Fig. 4a beispielsweise eine momentane Belastungskennlinie 22 mit dem Verlauf als gerade Linie nach der Funktion f1 mit der gleichbleibenden Steigung C1. Diese Kennlinie 22 verläuft vom Nullpunkt in geneigter und gerader Form bis zum Erreichen der maximalen Prüflast FPmax. Anschließend wird der Mast unter stetiger Verringerung der Druckkraft entlastet, so daß eine Entlastungskennlinie 23 erhalten wird. Auch diese strichliert dargestellte Kennlinie verläuft gerade, und zwar im gezeigten Fall nach der Funktion f2 mit der gleichbleibenden Steigung C2. Diese Kennlinie wird als rücklaufende Kennlinie ermittelt, und zwar von der maximalen Prüflast FPmax zurück bis zum gleichen Nullpunkt der Belastungskennlinie 22, so daß sich die beiden Kennlinien 22, 23 im vorliegenden Fall decken. Aus diesem bisherigen Prüfungsergebnis ergibt sich, daß sich die Verankerung 2 des Mastes nicht verändert, d. h. ideal verhalten hat und daß auch der Mast selbst keine Schädigung aufweist.

Um das Ergebnis des ersten Prüfungsvorganges abzusichern, wird in derselben Prüfungsebene mit entgegengesetzter Kraftrichtung geprüft. Zwecks Vermeidung einer Umsetzung der Prüfvorrichtung wird der Mast von dieser Vorrichtung mit einer Zugkraft biegebelastet. Die Ergebnisse dieses zweiten Meßvorganges sind in Fig. 4b wiedergegeben. Man erhält zunächst eine Belastungskennlinie 24 (ausgezogen gezeichnet), die einen geraden Verlauf hat nach der Funktion f3 mit der gleichbleibenden Steigung C3. Nach Erreichen der maximalen Prüflast FPmax erfolgt wieder eine sich stetig verringernde Zugkraft-Prüfbelastung des Mastes bis auf den Wert Null. Dabei entsteht eine gerade, gestrichelt dargestellte Entlastungskennlinie 25 nach der Funktion f4 mit der gleichbleibenden Steigung C4. Man erkennt aus Fig. 4b, daß die Verläufe der bei den Kennlinien 24 und 25 identisch sind, da auch in diesem Fall die gerade Entlastungskennlinie 25 in den Nullpunkt der Belastungskennlinie 24 zurückverläuft und mit ihrer Steigung C4 der Steigung C3 entspricht. Die Steigungen Cl bis C4 können auf dem Monitor 11 und/oder mit dem Drucker 12 in zahlenmäßigen Winkelgraden angegeben werden.

Stellt sich nun bei den Prüfvorgängen gemäß den Figuren 4a und 4b heraus, daß die Funktionen f1, f2, f3 und f4 einander so entsprechen, daß auch die jeweiligen Steigungen C1, C2, C3 und C4 über die gesamte Länge der geraden Kennlinien unverändert sind, also den gleichen Wert aufweisen, so folgt daraus, daß das gesamte System Mast/Verankerung schadenfrei ist.

Gemäß Fig. 5 wird ein weiterer Mast in einer vertikalen Ebene bis zur maximalen Prüfkraft FPmax geprüft, und zwar wird er zunächst mit einer Druckkraft, wie es Fig. 5a zeigt, und anschließend mit einer Zugkraft, wie es Fig. 5b zeigt, biegebeansprucht. Man erhält auch hier eine vom Nullpunkt beginnende und gleichmäßig ansteigende Belastungskennlinie 26 als Funktion f1 der Druckkraft F1 in Abhängigkeit der Auslenkwegstrecke S1. Zu dieser Belastungskennlinie gehört die Steigung C1. Nach Erreichen der maximalen Prüfkraft wurde die Entlastungskennlinie 27 aufgenommen. Hierbei wurde die Entlastungsfunktion f2 erhalten, und zwar als Funktion der Rückstellkraft F2 in Abhängigkeit von der sich reduzierenden Auslenkwegstrecke S2. Zu dieser Entlastungskennlinie gehört die Steigung C2. Da sich beide Kennlinien decken und in den Nullpunkt zurückkehren, kann daraus geschlossen werden, daß sowohl der Mast als auch seine Verankerung in Ordnung sind.

Es erfolgt dann der zweite Prüfungsvorgang in derselben Ebene mit einer Zugbelastung. Das Ergebnis ist in Fig. 5b wiedergegeben. Es wurde zunächst die ausgezogen dargestellte Belastungskennlinic 28 ermittelt, und zwar als Funktion f3 von der Prüfkraft F3 in Abhängigkeit von der Auslenkwegstrecke S3. Zu dieser Kennlinie gehört die Steigung C3, die zunächst einen steilen Verlauf und dann einen schwächer werdenden Verlauf hat. Anschließend wurde die Entlastungskennlinie 29 als Funktion f4 von der Rückstellkraft F4 in Abhängigkeit von der sich reduzierenden Auslenkung S4 ermittelt. Zu der gerade zurückverlaufenden Entlastungskennlinie 29 gehört die Steigung C4. Man stellt fest, daß die Entlastungskennlinie 29 nicht in den Nullpunkt zurückkehrt, sondern es verbleibt eine Restwegstrecke S4.

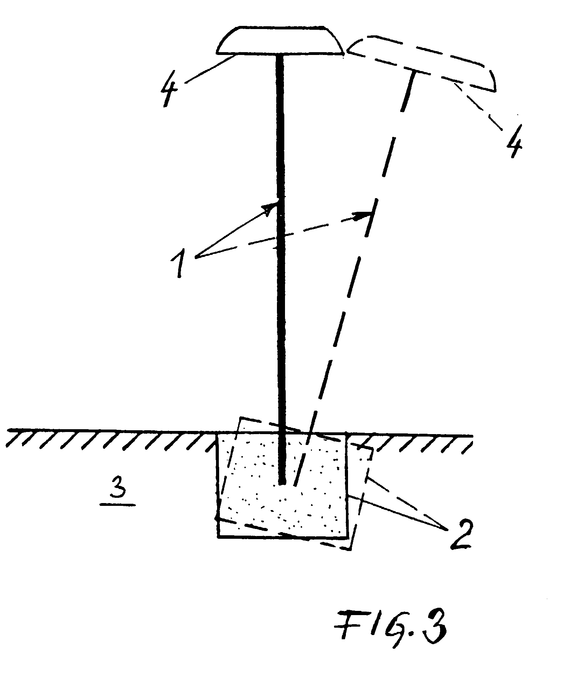

Ein Vergleich der Entlastungskennlinien 27 und 29 zeigt, daß sie beide den gleichen Verlauf haben und somit die gleiche Steigung über ihren gesamten Verlauf aufweisen. Daraus kann geschlossen werden, daß der Mast selbst in Ordnung ist, also beispielsweise keinen Riß aufweist. Da jedoch die Entlastungskennlinie 29 nicht in den Nullpunkt zurückkehrt, sondern es verbleibt bei vollständig aufgehobener Rückstellkraft eine Restweglänge S4, steht somit fest, daß die Verankerung 2 des Mastes 1 sich im Sinne einer Kippbewegung versetzt hat, wie es in Fig. 3 gestrichelt und übertrieben dargestellt ist. Der die Verankerung umgebende Erdboden hat also nachgegeben, was an der Belastungskennlinie 28 gemäß Fig. 5b daran erkennbar ist, daß sie in ihrem oberen Abschnitt in einen sehr flachen Verlauf, d. h. mit kleiner Steigung, übergeht. Aufgrund der Tatsache, daß bei der Entlastung des Mastes die zugehörige Entlastungskennlinie 29 bezüglich ihrer Rückstellausklenkung nicht in den Nullpunkt zurückkehrt, ist der obere, sehr flache Abschnitt der Belastungskennlinie 28 als Versagen der Verankerung 2 zu werten. Die Funktionen f3 und f4 weichen somit voneinander ab.

Die Darstellungen nach den Figuren 6a und 6b zeigen die Prüfungsergebnisse eines nächsten Mastes und seiner Verankerung. Die Abläufe der Prüfungsvorgänge in der gemeinsamen Prüfungsebene sind auch hier wie vorstehend in Verbindung mit den Figuren 4 und 5 beschrieben. Man erkennt in Fig. 6a, daß die Belastungskennlinie 30 zunächst einen erwarteten Verlauf nimmt, dann aber in ihrem oberen Abschnitt in eine zunehmend kleiner werdende Steigung übergeht. Die zurückkehrende Entlastungslinie 31 stellt sich als eine gerade Linie dar, mit der gleichbleibenden Steigung C2. Auch in diesem Fall verbleibt eine Restauslenkung S2. Somit ist auch hier ein Kippversatz der Mastverankerung 2, etwa vergleichbar mit der Darstellung in Fig. 3, gegeben, wobei der Mast selbst keine Schädigung aufweist.

Beim zweiten Prüfvorgang, bei welchem der Mast mit einer Zugbelastung biegebeansprucht wurde, ergibt sich das Diagramm nach Fig. 6b. Die Belastungskennlinie 32 weicht erheblich von einer geraden Linie ab, und zwar hat sie einen zunächst flachen Verlauf, der nach kurzer Auslenkungsstrecke dann in einen steileren Verlauf übergeht und im oberen Abschnitt wieder in einen flacheren Verlauf zurückkehrt, bis die maximale Prüfkraft erreicht worden ist. Die anschließende Entlastung des Mastes ergab wieder eine geradlinige Entlastungskennlinie 33, die wiederum nicht in den Nullpunkt zurückkehrt, sondern eine Restauslenkung S4 zurückläßt.

Man erkennt, daß sich die Verläufe der Entlastungslinien 31 und 33 dekken, so daß die Steigung C2 der Steigung C4 entspricht. Jedoch weichen die Funktionen f1 und f3 von den zugehörigen Funktionen f2 und f4 voneinander ab. Aus beiden Bildern nach den Figuren 6a und 6b kann wiederum geschlossen werden, daß der Mast selbst keine Schädigung aufweist, daß aber sowohl beim ersten als auch beim zweiten Prüfvorgang der Erdboden 3 gegenüber der Verankerung 2 des Mastes 1 nachgegeben hat und die Mastverankerung nicht einwandfrei ist.

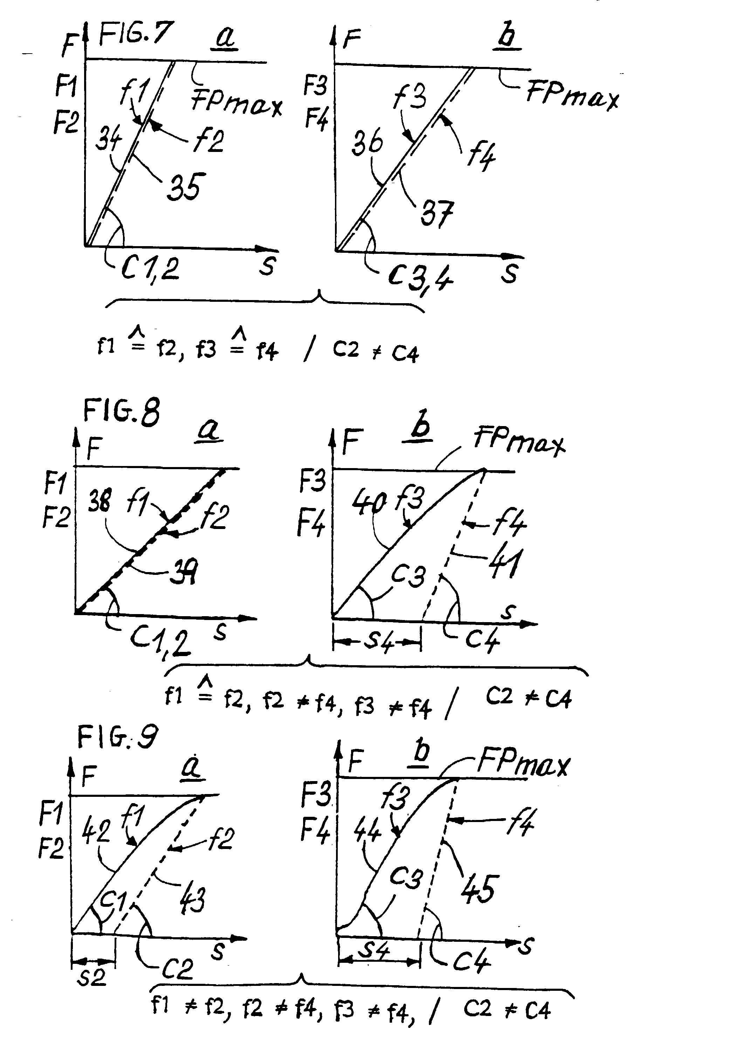

Die Darstellungen nach den Figuren 7a und 7b zeigen die Prüfungsergebnisse eines weiteren Mastes und seiner Verankerung. Auch diesen Darstellungen liegen die zuvor beschriebenen Prüfungsabläufe zugrunde. Gemäß Fig. 7a ergibt sich eine gerade, bis zur maximalen Prüfkraft verlaufende Belastungskennlinie 34. Die Entlastungskennlinie 35 deckt sich mit der Belastungskennlinie 34, so daß die Funktionen f3 und f4 einschließlich ihrer Steigung gleich sind. Beide Kennlinien haben denselben Nullpunkt. Somit sind der Mast und seine Verankerung ohne Schaden.

Nach Fig. 7b verläuft die Belastungskennlinie 36 ebenfalls gerade, und die Entlastungskennlinie 37 deckt sich wiederum mit ihrer zugehörigen Belastungskennlinie 36. Auch in diesem Fall weisen beide Linien über ihre gesamte Länge die gleiche Steigung und zusätzlich den gleichen Nullpunkt auf.

Zwar ist in beiden Fällen keine Restauslenkung festgestellt worden, jedoch weichen die Steigungen des ersten Linienpaares 34, 35 von denjenigen des zweiten Linienpaares 36, 37 ab, wobei das zweite Linienpaar eine geringere Steigung aufweist als das erste Linienpaar. Insgesamt kann aus den Verläufen der Kennlinien nach den Figuren 7a und 7b geschlossen werden, daß ein Versatz der Mastverankerung 2 nicht stattgefunden hat, daß aber der Mast eine Schädigung aufweist. Die Schädigung, beispielsweise ein Riß, ist an der kleineren Steigung des Linienpaares 36, 37 erkennbar, weil sich der Mast im Schädigungsfall elastischer verhält.

Der nächste Prüffall ist in den Figuren 8a und 8b dargestellt. Auch in diesem Fall erfolgen die Prüfvorgänge so, wie sie in Verbindung mit den Figuren 4 und 5 erläutert sind. Figur 8a zeigt eine Belastungskennlinie 38 als gerade Linie und eine Entlastungskennlinie 39 ebenfalls als gerade Linie. Die Verläufe dieser beiden Kennlinien sind identisch, da sie jeweils über ihre gesamte Länge die gleiche Steigung aufweisen.

Fig. 8b zeigt, daß die Belastungskennlinie 40 keinen geraden Verlauf aufweist, sondern in ihrer Steigung mit ansteigender Prüfkraft kleiner wird. Die zugehörige Entlastungskennlinie 41 verläuft wieder als gerade Linie mit gleichbleibender Steigung C4, die Entlastungskennlinie 41 kehrt jedoch nicht in den Nullpunkt zurück, sondern es verbleibt eine Restauslenkung S4.

Ein Vergleich der Linienpaare 38, 39 und 40, 41 zeigt, daß außer der festgestellten Restauslenkung S4 auch eine unterschiedliche Steigung von C2 und C4, also eine unterschiedliche Steigung der Entlastungskennlinien 39 und 41, gegeben ist. Hieraus ist nun zu schließen, daß sowohl der Mast 1 geschädigt ist, und zwar aufgrund der unterschiedlichen Steigung von C2 und C4, als auch ein Kippversatz der Bodenverankerung 2 vorliegt.

Schließlich ist noch ein Prüffall in den Figuren 9a und 9b dargestellt. Auch in diesem Fall sind die Prüfvorgänge so durchgeführt worden, wie sie in Verbindung mit den Figuren 4 und 5 beschrieben sind.

Fig. 9a zeigt, daß die Belastungskennlinie 42 einen einseitig gekrümmten Verlauf aufweist, und zwar mit geringer werdender Steigung C1. Die zugehörige Entlastungskennlinie 43 weist wieder einen geraden Verlauf auf mit gleichbleibender Steigung C2. Die Entlastungskennlinie 43 kehrt jedoch nicht in den Nullpunkt zurück, sondern es verbleibt eine Restauslenkung S2. Dies bedeutet, daß die Bodenverankerung 2 des Mastes 1 nachgegeben hat.

Fig. 9b zeigt, daß die Belastungskennlinie 44 ebenfalls einen gekrümmten Verlauf aufweist, und zwar zunächst mit einer flachen Steigung C3, die dann wieder größer wird, um dann wieder kleiner zu werden. Die zugehörige Entlastungskennlinie 45 verläuft wieder als gerade Linie und kehrt ebenfalls nicht in den Nullpunkt zurück. Es verbleibt eine Restauslenkung S4 des Mastes, die größer ist als die zuerst festgestellte Restauslenkung S2. Aus den unterschiedlichen Restauslenkungen S2 und S4 folgt, daß die Steigung C4 der Entlastungskennlinie 45 steiler ist als die Entlastungskennlinie 43.

Aus den Ergebnissen dieses Prüffalles ergibt sich, daß der Mast eine Schädigung aufweist, beispielsweise in Form eines Risses, und daß bei beiden Prüfvorgängen ein Kippversatz der Mastverankerung 2 gegeben ist.

Insbesondere aus den Prüffällen nach den Figuren 7, 8 und 9 ergibt sich, daß die Steigungen C2 und C4 der Funktionen f2 und f4 so ausgewertet werden, daß ein schadenfreier Mast vorliegt, wenn die Steigung C2 gleich der Steigung C4 ist, und daß ein schadhafter Mast vorliegt, wenn die Steigungen C2 und C4 voneinander abweichen.

Ferner kann festgestellt werden, an welcher Seite der Mast geschädigt ist, wenn die Steigungen C2 und C4 der jeweiligen Entlastungskennlinien ungleich sind. Ist die Steigung C2 (Druckkraft) kleiner als die Steigung C4 (Zugkraft), gilt dies als Aussage, daß ein Schaden auf derjenigen Mastseite vorliegt, an der die Kraft F1 wirkte. Ist die Steigung C2 größer als C4, dann liegt der Schaden auf derjenigen Mastseite, an der die Kraft F3 wirkte.

Ferner ist es möglich, daß bei der Prüfung des Mastes und seiner Verankerung nur die Verläufe der Funktionen f2 und f4, also die Verläufe der Entlastungskennlinien, ermittelt und hinsichtlich eines etwaigen Mastschadens und/oder Kippversatzes des Systems Mast/Verankerung ausgewertet werden.

Schließlich ist es möglich, den linearen Verlauf der Funktionen f2 und f4, also den linearen Verlauf der Entlastungskennlinien, durch Messung zweier Werte für jeweils F2 und S2 bzw. für F4 und S4 zu bestimmen. Diese Vorgehensweise erleichtert die Ermittlung der Entlastungskennlinien.

Bei dem vorstehend beschriebenen Verfahren kann auf das Vorhandensein von Referenz-Kennlinien verzichtet werden. Die Ermittlung und Beurteilung der Entlastungskennlinien gibt eine hinreichend sichere Auskunft darüber, daß der Mast und/oder seine Verankerung geschädigt sind, wobei die Schädigung der Verankerung als Veränderung ihrer Lage im Erdboden zu verstehen ist.

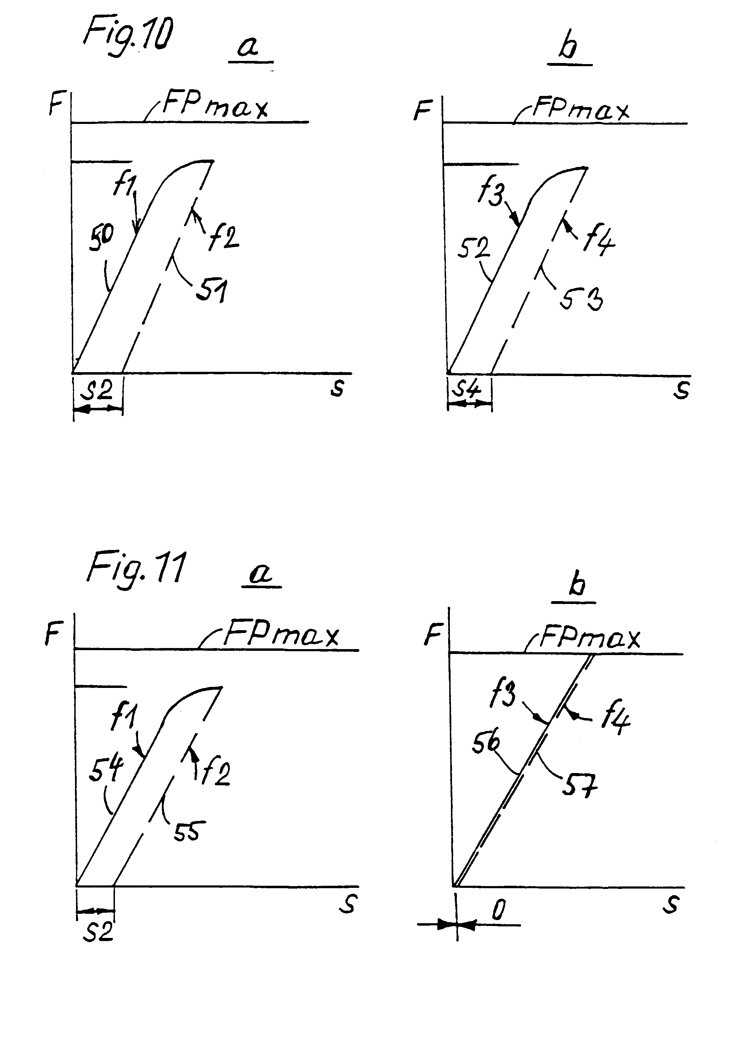

Bei den vorstehenden erläuterten Beispielen des vorgeschlagenen Verfahrens wird vorausgesetzt, daß die maximale Prüfkraft FPmax immer erreicht wird. Ist dies nicht der Fall, das heißt, die momentan herrschende und belastende Prüfkraft führt bereits vorher zu einer mehr oder weniger stetig flacher werdenden Steigung insbesondere des oberen Verlaufes der jeweiligen Belastungskennlinie, so ist es in vielen Fällen ferner möglich, auch auf die eine oder andere Schadensart des Mastes selbst schließen zu können. In solchen Fällen ergeben sich bei den Entlastungslinien in der Regel bleibende Mastauslenkungen, die zusammen mit den Verläufen der Belastungskennlinien und deren Endkraftwertcn beurteilt werden können. Dies ist nachstehend in Verbindung mit den Fig. 10-13 näher erläutert.

Gemäß Fig. 10a wird der zu prüfende Mast zunächst wiederum mit einer Druckkraft biegebeansprucht, und zwar mit einer stetig ansteigenden Kraft, so daß die ausgezogen dargestellte Belastungskennlinie 50 nach der Funktion f1 entsteht. Man erkennt, daß die angestrebte maximale Prüfkraft FPmax nicht erreicht wird, sondern daß die Linie 50 vorher in ihrer Steigung immer flacher wird und in ihrem oberen Endabschnitt in eine gekrümmte Form übergeht. Dieser erste Prüfvorgang wird an dieser Stelle abgebrochen, und es entsteht aufgrund der noch vorhandenen Elastizität des Mastes nach der Funktion f2 die gestrichelte Entlastungskennlinie 51. Diese verläuft nicht in den Nullpunkt zurück, sondern es verbleibt eine bleibende Restauslenkung des Mastes S2, die am Monitor zahlenmäßig oder symbolisch abgelesen und/oder mit dem Drucker dokumentiert wird.

Gemäß Fig. 10b wird nun der zweite Prüfvorgang durchgeführt, bei dem der Mast in der gleichen Ebene mit einer Zugkraft biegebeansprucht wird. Auch in diesem Fall ergibt sich eine ausgezogen dargestellte Belastungskennlinie 52 nach der Funktion f3, wobei diese Linie vor Erreichen der maximalen Prüfkraft FPmax wiederum in eine flacher werdende Krümmung im oberen Abschnitt übergeht. Die sich daran anschließende Entlastung ergibt die gestrichelt angedeutete Entlastungskennlinie 53 nach der Funktion f4. Auch diese Linie kehrt nicht in den Nullpunkt zurück, sondern es ergibt sich eine bleibende Mastauslenkung S4.

Ein Vergleich der beiden Kennlinienpaare dieser Figuren zeigt, daß die Belastungskennlinien 50, 52 von ihrem Nullpunkt geradlinig konstant ansteigen, sich in ihrem oberen Endabschnitt gleich oder etwa gleich flacher werdend krümmen, und zwar bei gleichem oder etwa gleichem Endwert unterhalb der maximalen Prüfkraft. Die Entlastungskennlinien 51 und 53 haben ebenfalls den gleichen Verlauf, und es ergeben sich gleiche oder etwa gleiche bleibende Mastauslenkungen, die beide größer Null sind. Das Resultat dieser beiden Prüfvorgänge besteht darin, daß ein Kippversatz der Mastverankerung nicht gegeben ist, daß aber der Mast selbst einen Schaden aufweist. Aufgrund seines bisherigen Betriebes ist der Mast durch einen Korrosionsvorgang geschädigt worden, der sich bei den beiden Prüfvorgängen dadurch geäußert hat, daß während der beiden Prüfvorgänge ein Plastifizieren des Mastes im Bereich der Korrosionsstelle stattgefunden hat. Wesentliche Merkmale hierfür sind, daß die Mastschädigung bei beiden Prüfvorgängen bei der gleichen oder etwa gleichen momentanen Prüfkraft unterhalb der maximalen Prüfkraft in Verbindung mit der bleibenden Restauslenkung erkennbar wird.

Die beiden Prüfvorgänge in den Fig. 11a und 11b offenbaren eine andere Schadensart des geprüften Mastes. Auch in diesem Fall werden die beiden Prüfvorgänge, zunächst Druckkraft, dann Zugkraft, wie vorstehend erwähnt ausgeführt. Es entsteht zunächst eine Belastungskennlinie 54 nach der Funktion f1, die in ihrem oberen Endabschnitt mit einer flacher werdenden Steigung vor Erreichen der maximalen Prüfkraft FPmax endet. Die zurückkehrende, gestrichelt dargestellte Entlastungskennlinie 55 nach der Funktion f2 endet wiederum in einer bleibenden Restauslenkung S2.

Beim zweiten Prüfvorgang nach Fig. 11b ergibt sich ein anderes Bild des Prüfungsablaufes. Es entsteht zunächst eine Belastungskennlinie 56 nach der Funktion f3, die jedoch insgesamt gerade verläuft und bei der die maximale Prüfkraft FPmax erreicht wird. Da bei dieser Kraft der Prüfvorgang wie vorgesehen abgebrochen wird, entsteht nun die Entlastungskennlinie 57 nach der Funktion f4, die sich in diesem Fall mit der Belastungskennlinic 56 deckt und somit in den Nullpunkt zurückkehrt, das heißt, es entsteht keinerlei bleibende Restauslenkung des Mastes.

Obwohl beim zweiten Prüfvorgang nach Fig. 11b keinerlei Schaden entdeckt werden konnte, also weder am Mast selbst noch an seiner Verankerung, läßt jedoch Fig. 11a zweifelsfrei auf einen Mastschaden schliessen, denn auch hier ist kein Versatz der Mastverankerung erkennbar. Der aus diesen beiden Prüfvorgängen resultierende Schaden ist ein Riß im Mast, der sich beim ersten Prüfvorgang vergrößert, im wesentlichen verlängert hat, und zwar in diesem Maße, daß eine bleibende Restauslenkung S2 festgestellt werden konnte. Der Verlauf der beiden Kennlinien 54 und 55 als Identifizierung als ein im Mast vorhandener Riß, der den Mast schon relativ stark geschwächt hat, läßt sich durch Fig. 11b erklären. Da hier die Prüfung in entgegengesetzter Richtung stattgefunden hat und dabei die Rißhälften aufeinandergedrückt wurden, hat sich der Mast beim zweiten Prüfvorgang praktisch wie ein ungeschädigter Mast verhalten. Bei dem Prüfvorgang nach Fig. 11 ist also ebenfalls kein Versatz der Mastverankerung gegeben, wohl aber hat der Mast einen Rißschaden.

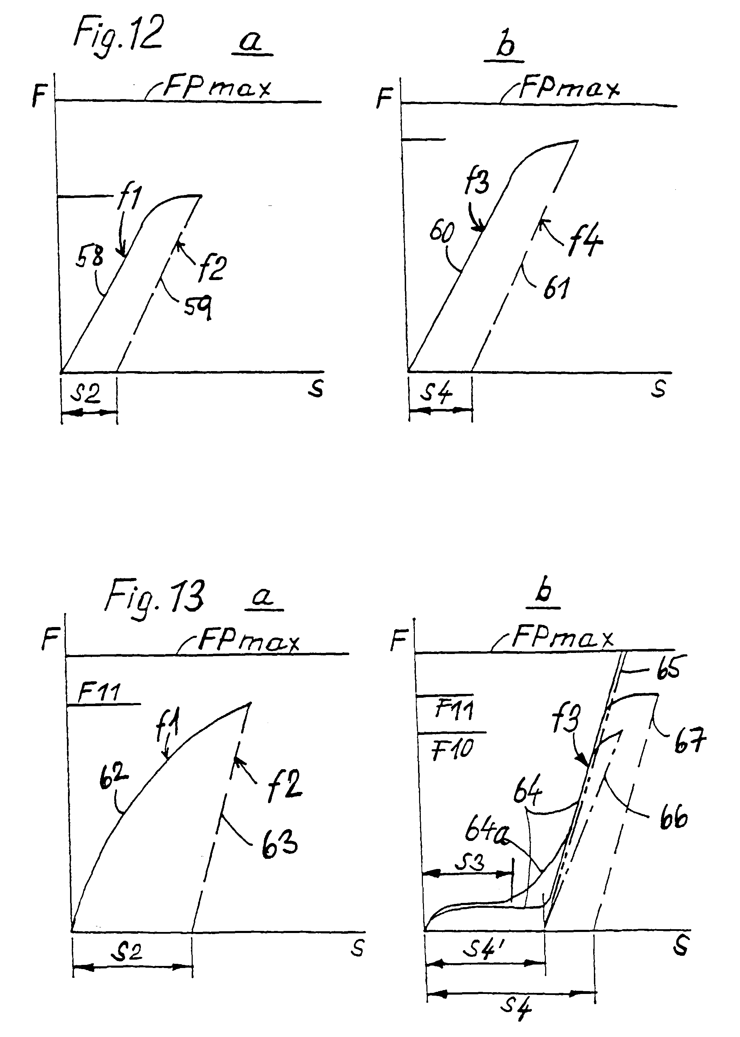

Eine noch weitere Schadensart ist aus den Fig. 12a und 12b zu entnehmen. Beim ersten Prüfvorgang nach Fig. 12a (Druckkraft) ergibt sich zunächst eine ausgezogen dargestellte Belastungskennlinie 58 nach der Funktion f1. In ihrem oberen Endbereich geht diese Linie wieder in eine flacher werdende Krümmung über, bei einer momentanen Prüfkraft, die ebenfalls unterhalb der maximalen Prüfkraft FPmax liegt. Der Prüfvorgang wird wiederum abgebrochen, um eine weitere Mastschädigung zu vermeiden. Die dann ermittelte Entlastungskennlinie 59 nach der Funktion f2 verläuft gerade zurück, endet aber nicht im Nullpunkt des Kraft-Weg-Systemes, sondern hinterläßt eine bleibende Restauslenkung des Mastes S2. Der zweite Prüfvorgang in der selben Prüfebene mit entgegengesetzter Prüfkraft (Zugkraft) ergibt zunächst eine Belastungskennlinie 60 nach der Funktion f3, die zunächst gerade ansteigt und in ihrem oberen Endbereich wiederum vor Erreichen der maximalen Prüfkraft in eine flacher werdende Krümmung übergeht. Der Prüfvorgang wird abgebrochen und ergibt nun eine rückkehrende Entlastungskennlinie 61 nach der Funktion f4, die ebenfalls nicht in den Nullpunkt des Kraft-Weg-Systemes zurückkehrt, sondern eine bleibende Restauslenkung S4 des Mastes ergibt.

Ein Vergleich der beiden Kennlinienpaare der Fig. 12a und 12b ergibt zunächst, daß die Verläufe der Belastungskennlinien in ihrem oberen Bereich als solche gleich oder im wesentlichen gleich sind, daß jedoch im zweiten Prüfvorgang eine größere momentane Prüfkraft erreicht wurde. Ansonsten haben die Kennlinienpaare 58 bis 61 im wesentlichen den gleichen Verlauf. Das weiter festgestellte Merkmal besteht darin, daß beide Entlastungskennlinien 59, 61 zu bleibenden Restauslenkungen des Mastes bei Prüfungsabbruch führen. Diese Resultate weisen auf eine Spannungsrißkorrosion oder eine interkristalline Korrosion des Mastes hin. Im Bereich des Risses, der sich beim ersten Prüfvorgang etwas aufgeweitet hat, hat während des Betriebes des Mastes eine Korrosion stattgefunden, die beim zweiten Prüfvorgang für eine Plastifizierung des Mastes im Bereich der Korrosion mitursächlich ist, so daß im zweiten Prüfvorgang eine höhere momentane Prüfkraft aufgewendet werden mußte. Ein Versatz der Mastverankerung ist bei diesen beiden Prüfvorgängen nicht eingetreten.

Ein weiteres Prüfungsergebnis ist in den Fig. 13a und 13b dargestellt. Nach Fig. 13a ergibt sich zunächst eine ausgezogen dargestellte Belastungskennlinie 62 nach der Funktion f1. Diese Linie 62 hat beispielsweise einen von Anfang an gekrümmten Verlauf, der in seinem Endbereich schon relativ flach geworden ist, so daß der Prüfvorgang (Druck) bei einer momentanen Prüfkraft unterhalb der maximalen Prüfkraft FPmax abgebrochen wird. Die sich anschließende zurückkehrende und gestrichelt dargestellte Entlastungskennlinie 63 verläuft im wesentlichen gerade und ergibt am Schluß eine bleibende Restauslenkung S2. Der sich anschließende zweite Prüfvorgang in derselben Prüfebene, jedoch in entgegengesetzter Richtung (Zugkraft), ergibt eine Belastungskennlinie, die zunächst nur ganz sanft ansteigt und auf einem etwa gleichbleibenden Kraftwert verharrt, wobei eine Auslenkung des Systemes Mast/Verankerung über eine bestimmte Strecke festzustellen ist. Danach ergibt sich ein relativ steiles Ansteigen der Belastungskennlinie 64.

Beim Ansteigen der Belastungskennlinie 64 können nun verschiedene Varianten dieser Linie eintreten. In einer ersten Variante verläuft diese Linie mit konstanter Steigung bis zur maximalen Prüfkraft FPmax. Es ergibt sich dann eine rückkehrende strichdoppeltpunktiert gezeigte Entlastungskennlinie 65, die sich mit dem Verlauf des zweiten Abschnittes der Linie 64 deckt und somit eine Restauslenkung S4' anzeigt. Ein Vergleich dieses Ergebnisses mit der Restauslenkung S2 nach Fig. 13a hedeutet, daß, wenn die Auslenkungen wie im hier gezeigten Fall gleich oder etwa gleich sind, kein Schaden im Mast festgestellt werden konnte, daß aber ein Versatz der Mastverankerung vorliegt. Dieses Ergebnis zeigt auch an, daß der Mast selbst keine Plastifizierung erfahren hat.

In einer zweiten Variante kann die Belastungskennlinie 64 im oberen Endbereich ihres zweiten Abschnittes vor Erreichen bei einer maximalen Prüfkraft, beispielsweise bei der momentanen Prüfkraft F10, eine flacher werdende Krümmung erfahren. Wenn der Prüfvorgang sofort abgebrochen wird, kann eine rückkehrende, strichpunktiert angedeutete Entlastungskennlinie 66 entstehen, die ebenfalls den zuvor festgestellten Restauslenkungswert S4' ergibt. In diesem Fall liegt ein Versatz der Mastverankerung vor, wobei der Mast einen im zweiten Prüfversuch festgestellten Rißschaden aufweist, der sich aber vollkommen elastisch verhalten hat, weil die Entlastungskennlinie 66 in den unteren Endpunkt zurückkehrt, von dem aus der zweite, steil ansteigende Abschnitt der Belastungskennlinie 64 beginnend gedacht werden muß, wie es sich aus Fig. 13h ergibt.

Eine dritte Variante im zweiten Prüfvorgang ergibt sich, wenn die Belastungskennlinie 64 ebenfalls im zweiten Abschnitt bei F11 vor Erreichen der maximalen Prüfkraft erheblich schwächer wird. Es erfolgt dann eine zurückkehrende, gestrichelt angedeutete Entlastungskennlinie 67, deren unteres Ende ebenfalls zu einer Restauslenkung S4 führt. Diese Restauslenkung ist jedoch größer als die zuvor festgestellte Restauslenkung S4'. Dies weist darauf hin, daß außer dem Versatz der Mastverankerung noch eine Schädigung des Mastes selbst in Form einer Rißverlängerung während des Prüfens vorliegt. In diesen Fällen ergibt sich eine Restauslenkung S4, die größer ist als die im ersten Prüfvorgang festgestellte Restauslenkung S2.

Eine vierte Variante ergibt sich bei der Tatsache, daß die Prüfbelastung des Mastes gemäß der Linie 62 bis zur Prüfkraft F1 dazu geführt hat, daß außer eines Versatzes der Mastverankerung auch ein Schaden am Mast selbst eingetreten ist, der aber durch die Restauslenkung S2 noch nicht genauer erkennbar ist. Beim zweiten Prüfvorgang nach Fig. 13b ergibt sich eine Bclastungskennlinie 64a, die an ihrem Anfang etwa wie die Linie 64 verläuft, aber bereits nach einer Auslenkung S3 steil ansteigt und dann beispielsweise wie die Linie 64 weiterverläuft. Als Entlastungslinie ergibt sich Linie 67 mit der Restauslenkung S4. Da in diesem Fall S2 > S3 und die momentane Prüfkraft F11 in beiden Prüfvorgängen gleich oder nahezu gleich ist bei insgesamt ungleichem Verlauf insbesondere der Belastungskennlinien, resultiert daraus, daß S3 für den Versatz der Mastverankerung im ersten Prüfvorgang kennzeichnend ist, während die Differenz der Auslenkungen ΔS = S2 - S3 für die bleibende Mastauslenkung aufgrund einer durch Korrosion bedingten Plastifizierung des Mastes typisch ist.

Wenn es gewünscht wird, den Einfluß der Verankerung des Mastes bei der Prüfung auszuschalten, dann kann der Mast an seinem Unterende gekontert werden, das heißt,. der an die Verankerung angrenzende Endbereich des Mastes wird mit einer mechanischen Einrichtung verbunden und dadurch stabilisiert, so daß die Verankerung unbeweglich ist. Es wird dann nur die Biegeauslenkung des Mastes allein meßtechnisch erfaßt und ausgewertet. Auch in diesem Fall wird die jeweilige Entlastungskennlinie mit der zugehörigen Belastungskennlinie verglichen und das Ergebnis für die Schadenfreiheit des Mastes bewertet. Schließlich sei noch betont, daß die vorkommenden Auslenkungen des Systemes Mast/Verankerung auch mittels Winkelsensoren festgestellt und entsprechend in der Auswerteeinheit 9 verarbeitet werden können.

## Patentansprüche

1. Verfahren zum Prüfen der Standfestigkeit eines stehend verankerten Mastes, bei dem der Mast mit einer oberhalb seiner Verankerung eingeleiteten ansteigenden Kraft F1 belastet wird, wobei diese Kraft und das Maß S1, um welches der Mast aufgrund der Krafteinwirkung in einer Richtung seitlich ausgelenkt wird, gegebenenfalls erfaßt werden und sich eine Funktion f1 = F1 (S1) ergibt, und bei dem der Mast nach Beendigung des Belastungsvorganges wieder entlastet wird, dadurch gekennzeichnet, daß die beim Entlastungsvorgang abnehmende Rückstellkraft F2 des Mastes in Abhängigkeit von der sich reduzierenden seitlichen Auslenkung S2 als Rückstellbewegung erfaßt wird, wobei sich eine Funktion f2 = F2 (S2) ergibt, und daß anhand des Verlaufes der Funktion f2 und einer weiteren Funktion (f1; f4) Rückschlüsse auf die Festigkeit des Mastes und seiner Verankerung gezogen werden.

2. Verfahren nach Anspruch 1, dadurch gekennzeichnet, daß
a. einander entsprechende Verläufe der Funktionen f1 und f2 als ein Kriterium für einen in der Prüfebene schadenfreien Mast und seiner Verankerung und
b. einander nicht entsprechende Verläufe dieser Funktionen als Kriterium für einen beim Belastungsvorgang aufgetretenen Kippversatz des Mastes im Bereich seiner Verankerung oder für eine Schädigung des Mastes und einen Kippversatz seiner Verankerung ausgewertet werden.

3. Verfahren nach Anspruch 1 oder 2, dadurch gekennzeichnet, daß die Kraft F1 linear ansteigend in den Mast eingeleitet wird und daß
a. eine Übereinstimmung der Steigungen C1 und C2 und der linearen, auf den gleichen Nullpunkt bezogenen Verläufe der Funktionen f1 und f2 als ein Kriterium für einen schadenfreien Mast und
b. ein Verlauf einer nicht in den Nullpunkt der Kraft F1 zurückkehrenden Rückstellkraft F2 als Kriterium für den erwähnten Versatz des Mastes ausgewertet werden.

4. Verfahren nach einem der Ansprüche 1 bis 3, bei dem der Mast nach einem ersten Prüfvorgang gemäß einem der Ansprüche 1 bis 3 in gleicher Prüfebene bei einem zweiten Prüfvorgang mit einer der Kraft F1 entgegengesetzt gerichteten Kraft F3 belastet und diese Kraft sowie die sich beim zweiten Prüfvorgang ergebende seitliche Auslenkung S3 des Mastes erfaßt werden, wobei sich eine Funktion f3 = F3 (S3) ergibt, dadurch gekennzeichnet, daß auch in den zweiten Prüfvorgang eine Entlastung des Mastes einbezogen wird, indem die sich bei dieser Entlastung ergebende Rückstellkraft F4 und die sich reduzierende Auslenkung S4 des Mastes erfaßt werden, wobei sich eine Funktion f4 = F4 (S4) mit einer Steigung C4 ergibt, und daß folgende Funktionsbeziehungen als folgende Aussagen ausgewertet werden, wobei «Kippversatz» eine Lageänderung des Mastes bzw. seiner Verankerung am oder im Boden bedeutet,
| Funktionsbeziehung | Aussage |
|---|---|
| f1 ≙ f2 ≙ f3 ≙ f4 C1 ≙ C2 ≙ C3 ≙ C4 | keine Schädigung des Mastes und kein Kippversatz seiner Verankerung |
| f1 ≙ f2, f3 ≠ f4 C2 ≙ C4 ≙ C1 | keine Schädigung des Mastes, aber Versatz beim zweiten Prüfvorgang, |
| f1 ≠ f2, f2 ≙ f4, f3 ≠ f4, C2 = C4 | keine Schädigung des Mastes, aber Versatz beim ersten und zweiten Prüfvorgang, |
| f1 ≙ f2, f3 ≙ f4 C2 ≠ C4 | Schädigung des Mastes, aber ein Versatz, |
| f1 ≙ f2, f2 ≠ f4, f3 ≠ f4 C2 ≠ C4 | Schädigung des Mastes und Versatz beim zweiten Prüfvorgang und |
| f1 ≠ f2, f2 ≠ f4, f3 ≠ f4, C2 ≠ C4 | Schädigung des Mastes und Versatz bei beiden Prüfvorgängen. |

5. Verfahren nach Anspruch 4. dadurch gekennzeichnet, daß die Steigungen C2 und C4 der Funktionen f2 und f4 so ausgewertet werden, daß eine Beziehung C2 ≙ C4 als Aussage für einen schadenfreien Mast und eine Beziehung C2 ≠ C4 als Aussage für einen geschädigten Mast gewertet werden.

6. Verfahren nach Anspruch 5, dadurch gekennzeichnet, daß bei Feststellung der Beziehung C2 ≠ C4 die Seite des Mastes ermittelt wird, an welcher der Mast geschädigt ist, wobei eine Beziehung C2 < C4 als aussage dafür gilt, daß ein Schaden auf der Mastseite vorliegt, an der die Kraft F1 wirkte, und eine Beziehung C2 > C4 besagt, daß ein Schaden auf der Mastseite liegt, an der die Kraft F3 zur Wirkung gebracht wurde.

7. Verfahren nach einem der Ansprüche 4 bis 6, dadurch gekennzeichnet, daß nur die Verläufe der Funktionen f2 und f4 ermittelt und hinsichtlich eines etwaigen Mastschadens und/oder Versatzes ausgewertet werden.

8. Verfahren nach einem der Ansprüche 4 bis 7, dadurch gekennzeichnet, daß der lineare Verlauf der Funktion f2 bzw. f4 durch Messung mindestens zweier Werte für jeweils F2 und S2 bzw. für F4 und S4 bestimmt wird.

9. Verfahren nach Anspruch 1, bei dem der Mast nach einem ersten Prüfvorgang gemäß einem der Ansprüche 1 bis 3 in gleicher Prüfebene bei einem zweiten Prüfvorgang mit einer der Kraft F1 entgegengesetzt gerichteten Kraft F3 belastet und diese Kraft sowie die sich beim zweiten Prüfvorgang ergebende seitliche Auslenkung S3 des Mastes erfaßt werden, wobei sich eine Funktion f3 = F3 (S3) ergibt, dadurch gekennzeichnet, daß auch in den zweiten Prüfvorgang eine Entlastung des Mastes einbezogen wird, indem die sich bei dieser Entlastung ergebende Rückstellkraft F4 und die sich reduzierende Auslenkung S4 des Mastes erfaßt werden, wobei sich eine Funktion f4 = F4 (S4) ergibt, daß beim ersten und zweiten Prüfvorgang im Falle des Nichterreichens der maximalen Prüfkraft (FPmax) sowohl der Verlauf und die Endwerte von Belastungskennlinien (50, 52) als auch die Restauslenkungen (S2, S4) von ermittelten Entlastungskennlinien (51, 53) erfaßt und für die Feststellung einer Schädigungsart des Mastes ausgewertet werden.

10. Verfahren nach Anspruch 9, dadurch gekennzeichnet, daß folgende Resultate als folgende Aussagen ausgewertet werden, wobei «Kippversatz» eine Lageänderung des Mastes bzw. seiner Verankerung am oder im Boden bedeutet:
| Resultat | Aussage |
|---|---|
| a) S2 > 0, S4 > 0 | kein Kippversatz, aber Plastizieren des Mastes in beiden Prüfvorgängen |
| Kennlinienverlauf gleich, deren Endkraftwerte gleich | |
| b) S2 > 0, S4 = 0/S2 = 0, S4 > 0 | kein Kippversatz, aber ein beim Prüfen verlängerter Riß |
| Kennlinien-Verlauf ungleich, Erreichen von FPmax in einem Prüfvorgang | |
| c) S2 > 0, S4 > 0 | kein Kippversatz, aber Spannungsrißkorrosion oder interkristalline Korrosion im Mast |
| Kennlinienverlauf oben ungleich, Endkraftwerte in 2. Prüfvorgang höher | |
| d) S2 = S4' | nur Kippversatz in 1. Prüfvorgang, kein Plastizieren des Mastes |
| insgesamt ungleicher Kennlinienverlauf, 2. Belastungslinie sehr flach beginnend und bei S4' steil ansteigend bis FPmax | |
| c) S2 < S4 | Kippversatz im 1. Prüfvorgang, Rißverlängerung beim 2. Prüfvorgang |
| insgesamt ungleicher Belastungslinienverlauf, 2. Belastungslinie sehr flach beginnend und bei S4' steil ansteigend | |
| f) S2 > S3 | Kippversatz und Plastizierung des Mastes beim 1. Prüfvorgang |
| insgesamt ungleicher Belastungslinienverlauf, 2. Belastungslinie sehr flach beginnend und bei S3 stark ansteigend, Prüfkräfte bei beiden Prüfvorgängen gleich | |

11. Vorrichtung zur Prüfung der Standfestigkeit von stehend verankerten Masten mit einer Krafteinheit, mit der in den Mast oberhalb seiner Verankerung ansteigende, mit einem Kraftsensor erfaßbare Biegekräfte F einleitbar sind, um den Mast mit Biegemomenten zu belasten und wieder zu entlasten, und mit einem oberhalb der Mastverankerung gegen den Mast zur Anlage bringbaren Sensor zum Messen der aufgrund der Biegemomente auftretenden seitlichen Auslenkung S des Mastes, wobei die von den Sensoren erzeugten Meßwerte für die Kraft F und die Auslenkung S zeitgleich in einer Auswerteeinheit in bezug auf die Funktionen f = F(S) bzw. f = S(F) verarbeitbar sind, und zwar gesondert nach Verläufen der Funktion f1 für einen ersten Biegebelastungsfall und f2 für wenigstens einen weiteren Prüfvorgang, dadurch gekennzeichnet, daß die Auswerteeinheit (9) mit Mitteln (20) zum Feststellen einer zu der ermittelten Belastungskennlinie (22) entsprechend der Funktion f1 gehörenden Entlastungskennlinie (23) ausgerüstet ist, die eine Funktion f2 aus den von den Sensoren (7, 8) gemessenen Rückstellwerten (F2, S2) darstellt.

12. Vorrichtung nach Anspruch 11, dadurch gekennzeichnet, daß die Auswerteinheit (9) mit Mitteln (21) zum Vergleichen der Verläufe der Funktionen f1 und f2 zwecks Feststellung einer Abweichung der beiden Kennlinien voneinander als Kriterium für eine Schädigung des Mastes (1) und/oder seiner Verankerung (2) versehen ist.

13. Vorrichtung nach Anspruch 11 oder 12, dadurch gekennzeichnet, daß die Funktionen der Belastungskennlinien und der Entlastungskennlinien optisch gemeinsam auf einem an die Auswerteeinheit (9) angeschlossenen Monitor darstellbar sind.

14. Vorrichtung nach Anspruch 11 oder 12, dadurch gekennzeichnet, daß die Funktionen der Belastungskennlinien und der Entlastungskennlinien mit einem an die Auswerteeinheit (9) angeschlossenen Drucker (12) gemeinsam dokumentierbar sind.

## Claims

1. Process for testing the strength of a vertically anchored mast, in which the mast is loaded with a rising force F1, introduced above its anchorage, wherein this force and the extent S1, by which the mast is laterally displaced in one direction as a result of the action of the force, are, if applicable, recorded, resulting in a function f1 = F1 (S1), and in which, after the loading procedure has ended, the mast is relieved of load again, characterised in that the re-adjusting force F2 of the mast, which decreases during the process of relieving the load, is plotted as a re-adjusting movement against the reducing lateral displacement S2, resulting in a function f2 = F2 (S2), and in that from the course of function f2 and a further function (f1;f4) conclusions are drawn as to the strength of the mast and its anchorage.

2. Process according to claim 1, characterised in that
a. courses of functions f1 and f2 corresponding to one another are evaluated as a criterion for a damage-free mast and its anchorage and
b. courses of these functions not corresponding to one another are evaluated as a criterion for a tilting misalignment of the mast in the region of its anchorage occurring during the loading process or for damage to the mast and a tilting misalignment of its anchorage.

3. Process according to Claim 1 or 2, characterised in that the force F1 is introduced into the mast as linearly rising and that
a. consistency of the gradients Cl and C2 and of the linear courses of functions f1 and f2, applied to the same zero point, is evaluated as a criterion for a damage-free mast and
b. a course of a re-adjusting force F2 not returning to the zero point of force F1 is evaluated as a criterion for the previously mentioned displacement of the mast.

4. Process according to one of Claims 1 to 3, in which, after a first testing procedure according to one of Claims 1 to 3, the mast is loaded in the same testing plane in a second testing procedure with a force F3 directed oppositely to the force F1 and this force and the lateral displacement S3 of the mast resulting from the second testing procedure are recorded, wherein a function f3 = F3 (S3) results, characterised in that relieving of the load on the mast is also involved in the second testing procedure and the readjusting force F4 resulting from this relieving of the load and the reducing displacement S4 of the mast are recorded, wherein a function f 4 = F4 (S4) results with a gradient C4, and in that the following functional relationships are evaluated as the following statements, wherein "tilting misalignment" signifies a change in position of the mast or its anchorage on or in the ground,
| Functional relationship | Statement |
|---|---|
| f1 ≙ f2 ≙ f3 ≙ f4 | no damage to the mast and no tilting misalignment of its anchorage, |
| C1 ≙ C2 ≙ C3 ≙ C4 | |
| f1 ≙ f2, f3 ≙ f4 | no damage to the mast, but misalignment in the second testing procedure, |
| C2 ≙ C4 ≙ C1 | |
| f1 ≠ f2, f2 ≙ f4, f3 ≠ f4 | no damage to the mast, but misalignment in first and second testing procedures, |
| C2 = C4 | |
| f1 ≙ f2, f3 ≙ f4 | damage to the mast, but no misalignment, |
| C2 ≠ C4 | |
| f1 ≙ f2, f2 ≠ f4, f3 ≠ f4 | damage to the mast and misalignment in second testing procedure, |
| C2 ≠ C4 | |
| f1 ≠ f2, f2 ≠ f4, f3 ≠ f4 | damage to the mast and misalignment in both testing procedures. |
| C2 ≠ C4 | |

5. Process according to Claim 4, characterised in that the gradients C2 and C4 of functions f2 and f4 are evaluated in such a way that a relationship C2 ≙ C4 is evaluated as a statement of a damage- free mast and a relationship C2 ≠ C4 as a statement of a damaged mast.

6. Process according to Claim 5, characterised in that, in establishing the relationship C2 ≠ C4, the side of the mast on which the mast is damaged is detected, wherein a relationship C2 < C4 is regarded as a statement that there is damage on the side of the mast on which force F1 was acting and a relationship C2 > C4 means that there is damage on the side of the mast on which force F3 was being put into effect.

7. Process according to one of Claims 4 to 6, characterised in that only the courses of functions f2 and f 4 are detected and evaluated for any mast damage and/or misalignment.

8. Process according to one of Claims 4 to 7, characterised in that the linear course of function f2 or f4 is determined by measuring at least two values for F2 and S2 or for F4 and S4 respectively.

9. Process according to Claim 1, in which the mast, after a first testing procedure according to one of Claims 1 to 3, is loaded in the same testing plane in a second testing procedure with a force F3 directed oppositely to the force F1 and this force and the lateral displacement S3 of the mast resulting from the second testing procedure are recorded, wherein a function f 3 = F3 (S3) results, characterised in that relieving of the load on the mast is also involved in the second testing procedure and the re-adjusting force F4 resulting from this relieving of the load and the reducing displacement S4 of the mast are recorded, wherein a function f4 = F4 (S4) results, and in that in the first and second testing procedures, in the event of the maximum testing force (Fpmax) not being reached, both the course and the final values of characteristic lines for loading (50, 52), as well as the residual displacements (S2, S4) of detected characteristic lines for relieving the load (51, 53), are plotted and evaluated to establish the type of damage to the mast.

10. Process according to Claim 9, characterised in that the following results are evaluated as the following statements, wherein "tilting misalignment" signifies a change in position of the mast or its anchorage on or in the ground:
| Result | Statement |
|---|---|
| a) S2 > 0, S4 > 0 | no tilting misalignment, but plasticising of the mast in both testing procedures |
| course of characteristic lines equal, final force values thereof equal | |
| b) S2 > 0, S4 = 0/S2 = 0, S4 > 0 | no tilting misalignment, but elongated cracking on testing |
| course of characteristic lines unequal, Fpmax reached in one testing procedure | |
| c) S2 > 0, S4 > 0 | no tilting misalignment, but stress cracking corrosion or intercrystalline corrosion in the mast |
| course of characteristic lines unequal at the top, final force values higher in 2nd testing procedure | |
| d) S2 = S4' | tilting misalignment only in 1st testing procedure, no plasticising of the mast |
| course of characteristic lines unequal as a whole, 2nd loading line beginning very flat and at S4' rising steeply to Fpmax | |
| e) S2 < S4 | tilting misalignment in 1st testing procedure, elongation of cracking in 2nd testing procedure |
| unequal course of loading lines as a whole, 2nd loading line beginning very flat and rising steeply at S4' | |
| f) S2 > S3 | tilting misalignment and plasticising of the mast in 1 st testing procedure |
| unequal course of loading lines, 2nd loading line beginning very flat and rising sharply at S3, testing forces equal in both testing procedures. | |

11. Device for testing the strength of vertically anchored masts with a force unit by which rising bending forces F, which can be recorded by a force sensor, can be introduced into the mast above its anchorage, in order to load the mast with bending moments and to relieve the load again, and with a sensor which can be brought to bear against the mast above the mast anchorage for measuring the lateral displacement S of the mast, occurring as a result of the bending moments, wherein the measured values for the force F and the displacement S generated by the sensors can be processed with regard to the functions f = F(S) or f = S(F) in an evaluation unit at the same time, this being done separately according to courses of function f1 in the case of a first bending load and f2 for at least one further testing procedure, characterised in that the evaluation unit (9) is equipped with means (20) for establishing a characteristic line for relieving the load (23) associated with the detected characteristic line (22) for loading corresponding to function f1, which represents a function f2 emerging from the re-adjusting values (F2, S2) measured by the sensors (7, 8).

12. Device according to Claim 11, characterised in that the evaluation unit (9) is provided with means (21) for comparing the courses of functions f1 and f2 for the purpose of establishing a divergence of the two characteristic lines from one another as a criterion for damage to the mast (1) and/or its anchorage (2).

13. Device according to Claim 11 or 12, characterised in that the functions of the characteristic lines for loading and the characteristic lines for relieving the load can be represented as optically combined on a monitor connected to the evaluation unit (9).

14. Device according to Claim 11 or 12, characterised in that the functions of the characteristic lines for loading and the characteristic lines for relieving the load can be mutually documented by a printer (12) connected to the evaluation unit (9).

## Revendications

1. Procédé de contrôle de la stabilité d'un mât ancré en position verticale, selon lequel le mât est chargé avec une force F1 croissante appliquée au-dessus de son ancrage, cette force et la valeur S 1 de laquelle le mât est dévié latéralement dans une direction sous l'action de la force étant relevées le cas échéant, en permettant l'établissement d'une fonction f1 = F1 (S1), et selon lequel le mât est à nouveau déchargé après achèvement de la phase d'application de la charge, caractérisé en ce que la force de rappel F2 du mât, qui décroît lors de la phase où le mât est déchargé, est relevée en fonction de la déviation latérale S2 qui diminue en tant que mouvement de rappel, en permettant l'établissement d'une fonction f2 = F2 (S2), et en ce que sur la base de la loi de variation de la fonction f2 et d'une autre fonction (f1 ; f4). on tire des conclusions quant à la résistance du mât et de son ancrage.

2. Procédé selon la revendication 1, caractérisé en ce que
a. des lois de variation, qui sont en correspondance l'une avec l'autre, des fonctions f1 et f2 sont interprétées comme un critère pour une absence de dommages, dans le plan de contrôle, sur un mât et son ancrage, et
b. des lois de variation, qui ne sont pas en correspondance l'une avec l'autre, de ces fonctions sont interprétées comme critère pour l'apparition, durant la phase de charge d'un déport par basculement du mât dans la zone de son ancrage ou pour un endommagement du mât et un déport par basculement de son ancrage.

3. Procédé selon la revendication 1 ou 2, caractérisé en ce que la force F1 est appliquée au mât de manière linéairement croissante, et en ce que
a. une coïncidence des pentes C1 et C2 et des lois de variation linéaires des fonctions f1 et f2, rapportées au même point origine, est interprétée comme un critère pour un mât exempt de dommages, et
b. une loi de variation d'une force de rappel F2 ne retournant pas au point origine de la force F1 est interprétée comme critère pour la déport mentionné du mât.

4. Procédé selon l'une des revendications 1 à 3, selon lequel le mât, après une première opération de contrôle conforme à l'une des revendications 1 à 3, est chargé, durant une seconde opération de contrôle, dans le même plan de contrôle, avec une force F3 de direction opposée à la force F1, et cette force ainsi que la déviation latérale S3 du mât. apparaissant durant la seconde opération de contrôle, sont relevées en permettant l'établissement d'une fonction f3 = F3 (S3), caractérisé en ce que dans la seconde opération de contrôle est également intégrée une décharge du mât, par le fait que la force de rappel F4 apparaissant lors de cette décharge et la déviation S4, qui diminue, du mât sont relevées, en permettant l'établissement d'une fonction f4 = F4 (S4) avec une pente C4, et en ce que les relations entre fonctions suivantes sont interprétées comme donnant les indications suivantes, "déport par basculement" signifiant une variation de positionnement du mât ou de son ancrage au sol ou dans le sol:
| Relation entre fonctions | Indication |
|---|---|
| f1 ≅ f2 ≅ f3 ≅ f4 | pas de dommages sur le mât et pas de déport par basculement de son ancrage, |
| C1 ≅ C2 ≅ C3 ≅ C4 | |
| f1 ≅ f2, f3 ≠ f4 | pas de dommages sur le mât, mais déport lors de la seconde opération de contrôle, |
| C2 ≅ C4 ≅ C1 | |
| f1 ≠ f2, f2 ≅ f4, f3 ≠ f4 | pas de dommages sur le mât, mais déport lors de la première et de la seconde opération de contrôle, |
| C2 = C4 | |
| f1 ≅ f2, f3 ≅ f4 | dommages sur le mât, mais déport, |
| C2 ≠ C4 | |
| f1 ≅ f2, f2 ≠ f4, f3 ≠ f4 | dommages sur le mât et déport lors de la seconde opération de contrôle, et |
| C2 ≠ C4 | |
| f1 ≠ f2, f2 ≠ f4, f3 ≠ f4 | dommages sur le mât et déport lors des deux opérations de contrôle. |
| C2 ≠ C4 | |

5. Procédé selon la revendication 4, caractérisé en ce que les pentes C2 et C4 des fonctions f2 et f4 sont traitées de façon telle, qu'une relation C2 ≅ C4 soit interprétée comme indication d'un mât exempt de dommages, et une relation C2 ≠ C4 comme indication d'un mât endommagé.

6. Procédé selon la revendication 5, caractérisé en ce qu'en cas de constatation de la relation C2 ≠ C4, on détermine le côté du mât sur lequel le mât est endommagé, une relation C2 < C4 valant comme indication du fait qu'un dommage existe sur le côté du mât sur lequel agissait la force F1, et une relation C2 > C4 indiquant qu'un dommage est présent sur le côté du mât sur lequel on a fait agir la force F3.

7. Procédé selon l'une des revendications 4 à 6, caractérisé en ce que seules les lois de variation des fonctions f2 et f4 sont déterminées et interprêtées quant à un éventuel endommagement du mât et/ou un déport de celui-ci.

8. Procédé selon l'une des revendications 4 à 7, caractérisé en ce que la loi de variation linéaire de la fonction f2 et respectivement f4 est déterminée par la mesure d'au moins deux valeurs pour F2 et S2 et respectivement pour F4 et S4.

9. Procédé selon la revendication 1, selon lequel le mât, après une première opération de contrôle conforme à l'une des revendications 1 à 3, est chargé, durant une seconde opération de contrôle, dans le même plan de contrôle, avec une force F3 de direction opposée à la force F1, et cette force ainsi que la déviation latérale S3 du mât, apparaissant durant la seconde opération de contrôle, sont relevées en permettant l'établissement d'une fonction f3 = F3 (S3), caractérisé en ce que la seconde opération de contrôle est également intégrée une décharge du mât, par le fait qu'on relève la force de rappel F4 apparaissant lors de cette décharge et la déviation S4 du mât, qui diminue, en permettant l'établissement d'une fonction f4 = F4 (S4), en ce que lors de la première et de la seconde opération de contrôle, dans le cas où l'on n'atteint pas la force de contrôle maximale (FPmax), on relève aussi bien la loi de variation et les valeurs extrêmes de courbes caractéristiques de charge (50, 52) que les déviations résiduelles (S2, S4) de courbes caractéristiques de décharge (51, 53) déterminées, et en ce qu'on les interprète pour la détermination d'un type d'endommagement du mât.

10. Procédé selon la revendication 9, caractérisé en ce que les résultats suivants sont interprétés comme donnant les indications suivantes, "déport par basculement" signifiant une variation de positionnement du mât ou de son ancrage au sol ou dans le sol:
| Résultat | Indications |
|---|---|
| a) S2 > 0, S4 > 0 | pas de déport par basculement, mais plasticité du mât dans les deux opérations de contrôle |
| loi de variation des courbes caractéristiques identique, leurs valeurs extrêmes de force identiques | |
| b) S2 > 0, S4 = 0 / S2 = 0, S4 >0 | pas de déport par basculement, mais une fissure qui s'est allongée lors du contrôle |
| loi de variation des courbes caractéristiques non identique, FPmax atteint dans une opération de contrôle | |
| c) S2 > 0, S4 > 0 | pas de déport par basculement, mais corrosion fissurante due à la contrainte ou corrosion intercristalline dans le mât |
| loi de variation des courbes caractéristiques non identique dans le haut, valeurs extrêmes de force plus élevées dans la 2^{e} opération de contrôle | |
| d) S2 = S4 | uniquement déport par basculement dans la le opération de contrôle, pas de plasticité du mât |
| loi de variation des courbes caractéristiques globalement non identique, 2^{e} courbe de charge débutant de manière très plate et croissant fortement à partir de S4' jusqu'à FPmax | |
| e) S2 < S4 | déport par basculement dans la 1^{e} opération de contrôle, allongement de fissure dans le cas de la 2^{e} opération de contrôle |
| loi de variation des courbes de charge globalement non identique, 2^{e} courbe de charge débutant de manière très plate et croissant fortement à partir de S4' | |
| f) S2 > S3 | déport par basculement et plasticité du mât dans le cas de la le opération de contrôle. |
| loi de variation des courbes de charge globalement non identique, 2^{e} courbe de charge débutant de manière très plate et croissant fortement à partir de S3, forces de contrôle identiques pour les deux opérations de contrôle. | |

11. Dispositif de contrôle de la stabilité de mâts ancrés en position verticale, comprenant une unité d'application de force à l'aide de laquelle il est possible d'appliquer au mât, au-dessus de son ancrage, des forces de flexion F croissantes, pouvant être relevées à l'aide d'un capteur de force, en vue de charger le mât avec des moments de flexion et de le décharger à nouveau, le dispositif comportant également un capteur pouvant être appliqué contre le mât, au-dessus de l'ancrage du mât, pour mesurer la déviation latérale S du mât apparaissant en raison des moments de flexion, les valeurs de mesure, engendrées par les capteurs, pour la force F et la déviation S pouvant être traitées en même temps dans une unité de traitement en ce qui concerne les fonctions f = F(S) et respectivement f = S(F), ceci de manière distincte selon des lois de variation de la fonction f1 pour un premier cas de charge en flexion et f2 pour au moins une autre opération de contrôle, caractérisé en ce que l'unité de traitement (9) est équipée de moyens (20) destinés à établir une courbe caractéristique de décharge (23), qui est affectée à la courbe caractéristique de charge (22) déterminée conformément à la fonction f1 et qui représente une fonction f2 des valeurs de rappel (F2, S2) mesurées par les capteurs (7, 8).

12. Dispositif selon la revendication 11, caractérisé en ce que l'unité de traitement (9) est dotée de moyens (21) pour la comparaison des lois de variation des fonctions f1 et f2 en vue de la détermination d'un écart entre les deux courbes caractéristiques, en tant que critère pour un endommagement du mât (1) et/ou de son ancrage (2).

13. Dispositif selon la revendication 11 ou 12, caractérisé en ce que les fonctions des courbes caractéristiques de charge et des courbes caractéristiques de décharge peuvent être représentées optiquement, en commun, sur un écran raccordé à l'unité de traitement (9).

14. Dispositif selon la revendication 11 ou 12, caractérisé en ce que les fonctions des courbes caractéristiques de charge et des courbes caractéristiques de décharge peuvent être reproduites, en commun, à l'aide d'une imprimante (12) raccordée à l'unité de traitement (9).
